# EUROPEAN PATENT SPECIFICATION

(11) **EP 0 367 412 B1**
(45) Date of publication and mention of the grant of the patent: **09.03.1994**
(21) Application number: 89310216.0
(22) Date of filing: 05.10.1989
(51) Int. Cl.: B29C 33/56, B29C 67/14

(54) **A soft moulding method**
Formverfahren
Procédé de moulage

(30) Priority: 04.11.1988 US 267359
(43) Date of publication of application: 09.05.1990
(73) Proprietor: GENERAL MOTORS CORPORATION, Detroit Michigan 48202 (US)
(72) Inventor: Kia, Hamid G., Utica Michigan 48087 (US)
(74) Representative: Denton, Michael John

(56) References cited:
- US-A- 4 385 955
- US-A- 4 664 862
- US-A- 4 781 876

## Description

### Field of the Invention

The present invention relates to a method of moulding a glass fibre-reinforced plastics panel as specified in the preamble of claim 1, for example as disclosed in US-A-4,610,835, and, more particularly, relates to a method of producing a glass fibre mat-reinforced plastics panel without the fibre content showing as a surface defect on the surface of the panel.

### Background of the Invention

Glass fibre-reinforced plastics have been used widely in the automotive industry in recent years. These plastics include sheet-moulding compound, glass fibre-reinforced reaction-injection mouldable materials and various other glass fibre-reinforced plastics. The advantages of lightweight, high-strength, rust-proofing and relatively low cost make these materials ideal for many automotive exterior body panel applications.

Of these materials, the reinforced reaction-injection mouldable material (RRIM) is of particular interest to the automotive industry because it can be processed economically with relatively low-cost tooling. RRIM materials filled with glass fibre mats have greatly improved stiffness and dimensional stability and therefore are especially suitable for many automotive exterior body panel applications. The processing of such glass fibre mat-reinforced RIM is relatively simple. The process involves placing a glass fibre mat in a mould cavity and injecting RIM material into the closed mould so that the RIM material is soaked through the glass fibre mat. A completed plastics part can be removed after it is cured in the mould.

A typical RIM material used in this process is a polyurethane-based material produced from two components, an isocyanate and a polyol. The in-mould pressure of such a material system used in a RIM process is typically less than 344.7 kPa (50 psi). As a consequence, low-cost tooling having low clamping force can be used for the process.

The dimensional stability of glass fibre mat-reinforced RIM material is greatly improved over that of a RIM material reinforced with milled glass. As a matter of fact, the dimensional stability of glass fibre mat-reinforced RIM is even superior to that of aluminium. This superior dimensional stability is achieved while other traditional benefits of RRIM, i.e., stiffness, strength, and ease of processing are maintained.

In the processing of glass fibre mat-reinforced RIM materials, a new problem was discovered. This is generally called a "fibre readout defect" observed in the surface layer of a glass fibre mat-reinforced RIM part. It is a particularly serious problem when panels are used for exterior automotive body applications where aesthetic quality is of prime importance.

The "fibre readout defect" problem is caused largely by the presence of glass fibre in the surface layer of a plastics panel. When a panel is situated in a mould under compression, resin material located between the panel surface and a glass fibre in the surface layer of the panel is under higher pressure than is resin material that is located away from a glass fibre. As a consequence, when the part is removed from the mould, the cured material located adjacent to a glass fibre will expand more than the resin material not adjacent to a glass fibre. This results in a panel having a surface showing protruding contours of glass fibres which are located immediately below the surface of the panel, commonly known as the "fibre readout phenomenon" or "fibre readout defect".

Numerous efforts have been made to correct the fibre readout defect observed in glass fibre mat-reinforced plastics panels. These efforts include the invention disclosed in US-A-4,610,835. In that application, the inventor has shown that the application of a top coating layer in a secondary moulding process could conceal fibre readout if pressure was released before the end of the moulding cycle. However, this process requires delicate process control which may not be feasible in a mass-production process.

It is therefore an object of the present invention to provide a method of producing glass fibre mat-reinforced RIM panels without the fibre readout defect which is readily adaptable to a mass-production process.

It is another object of the present invention to provide a method of making glass fibre mat-reinforced RIM panels without the fibre readout defect such that those panels can be readily decorated to produce a pre-decorated surface for automotive exterior body panel applications.

It is a further object of the present invention to provide a method of making glass fibre mat-reinforced RIM panels without the fibre readout defect by incorporating the use of at least one layer of a flexible sheeting material in the moulding apparatus adjacent to the moulded panel.

### Summary of the Invention

A method of compression-moulding a glass fibre mat-reinforced plastics panel according to the present invention is characterised by the features specified in claim 1.

It has been discovered that one of the factors that is responsible for the formation of fibre readout defect is uneven stress conditions in the surface layer of the panel in the areas of the resin materials adjacent to a glass fibre. The present invention comprises a novel technique in which at least one layer of a flexible sheeting material is used in the mould apparatus during the moulding process, which situated immediately adjacent to the non-appearance surface of the moulded panel.

In accordance with a preferred practice of the present invention, a method of producing glass fibre mat-reinforced plastics panels without the fibre readout defect can be carried out by the following operative steps.

First, a set of matched metal moulds is prepared of which at least one of the two opposing interior mould surfaces is the appearance surface to be reproduced on a moulded panel. This appearance surface is the mirror image of the finished surface on a moulded panel. At least one layer of a flexible sheeting material is placed on the mould surface producing the non-appearance side of the panel surface. One or more layers of glass fibre mats are then placed in the mould. After closing the two halves of the mould together, a polymeric resin is injected into the mould cavity. A sufficient time is allowed for the resin to cure before the mould is opened. A glass fibre mat-reinforced plastics panel having a smooth appearance surface is thus produced.

The flexible sheeting material serves the important function of relieving the stresses imposed on the glass fibres by the clamping pressure of the mould.

In a further embodiment of the invention, an additional layer or layers of glass fibre veils is/are placed on top of the glass fibre mats adjacent to the appearance surface of the moulded panel to control the distance of the glass fibres from the appearance surface. This additional layer or layers of glass fibre veils further improves the smoothness of the appearance surface of the RIM panel so that a so-called "class A surface" in the automotive industry is obtained directly from the moulding process. A "class A surface" generally means a surface that can be painted directly without any further finishing steps and then used as an exterior surface of an automobile.

### Description of the Drawings

Other objects, features and advantages of the present invention will become apparent upon consideration of the specification and the appended drawings, in which:
Figure 1 is an enlarged cross-sectional view of a schematic representation of glass fibres contained in a glass fibre mat in between two mould surfaces and a layer of a glass veil.
Figure 2 is an enlarged cross-sectional view of a schematic representation of glass fibres contained in a glass fibre mat in between two mould surfaces, a layer of glass fibre veil, and a layer of a flexible sheeting material.
Figure 3 is a schematic representation of a laboratory mould used in the present invention.
Figure 4 shows profilometer readings from the surfaces of RIM panels reinforced with glass fiber mats; (a) moulded without the flexible sheeting layer; (b) moulded with the flexible sheeting layer.

### Description of the Preferred and Alternate Embodiment

The present invention is a unique method which allows for the production of glass fibre mat-reinforced plastics panels without the fibre readout defect. The technique involves the use of an additional layer of a flexible sheeting material in between the two interior mould surfaces adjacent to the mould surface which is used to form the non-appearance side of the moulded panel. A polyurethane RIM material is then injected into the mould either through a centre gate or through a side gate after glass fibre mats are first placed in the mould cavity.

A more noticeable improvement is achieved when one or more layers of glass fibre veils are used on top of the glass fibre mats in the appearance surface of the RIM panel. This process is described in detail in the alternate embodiment of the present invention. This improvement by the use of glass fibre veils can be attributed largely to the fact that the glass fibre mats are kept further away from the appearance surface of the RIM panel.

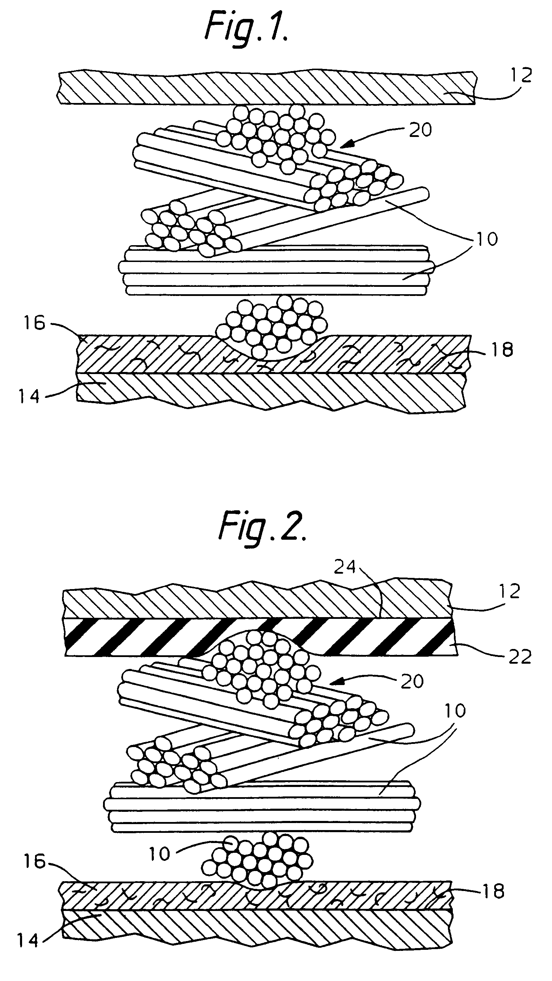

Referring initially to Figure 1, wherein an enlarged cross-sectional view of a schematic representation of glass fibres 10 contained in between two mould members 12 and 14 and a layer of glass veil 16 is shown. This schematic representation is drawn for illustrative purposes and, therefore, the relative thickness of the various materials are not drawn to scale. It is to be noted that the use of the layer of glass veil 16 is optional and not essential in the present invention.

The purpose of using layers of glass fibre veils is to control the distance of the glass fibres 10 contained in the glass fibre mats 20 from the appearance surface 18 of the RIM panel. The glass veil is composed of chopped glass fibres typically 1-10 cm long which are randomly oriented. Depending on the types of glass veils, the size of the filaments and the number of filaments per bundle varies. In the present invention, the glass veils used were the type having 1-5 filaments per bundle and the fibres are between 2-5 cm length. Polyester veils have also been used to achieve the same purpose.

A fine texture glass veil that has been used is commercially available from the International Paper Company, U.S.A. (grade 80000110) which is composed of 75% 12.7 mm (0.5 inch) glass filaments and 25% 25.4 mm (1 inch) glass filaments. An equivalent material is a fine texture polyester veil commercially available from the Dexter Corporation U.S.A. (grade 9384)

The reinforcing glass fibre mats were supplied by the Owens-Corning Fiberglas Company, U.S.A. (grade 8610) and PPG, U.S.A. (Azdel (R.T.M.) glass mats).

As shown in Figure 1, the thickness of the glass veils were measured and enough layers were used to provide a 0.6 mm distance between the reinforcing glass fibre mat 20 and the appearance surface 18 of the RIM panel. However, in spite of the use of the glass veils, fibre readout still appears on the appearance surface of the panel. The inventor concluded that the reason for this defect is that the clamp pressure in a mould is transferred from one side of the cavity to the other through the glass fibres contained in the mats. Due to the nature of the glass fibres, there are regions of high stress which act as support pillars and primarily carry the clamping load across the cavity. These are the regions that show maximum fibre readout defect on the moulded panel surface.

To minimize and eliminate this fibre readout defect, a thin layer of a flexible sheeting material is used on the non-appearance side of the RIM panel. This is shown in Figure 2. A thin layer of a flexible sheeting material 22 is used on the non-appearance side of the RIM panel between the interior mould surface 24 and the glass fibre mats 20. As seen in Figure 2, because of the flexible sheeting layer, the locally-stressed fibres are now relaxed and, therefore, produce very little, if any, protrusions on the appearance surface of the RIM panel.

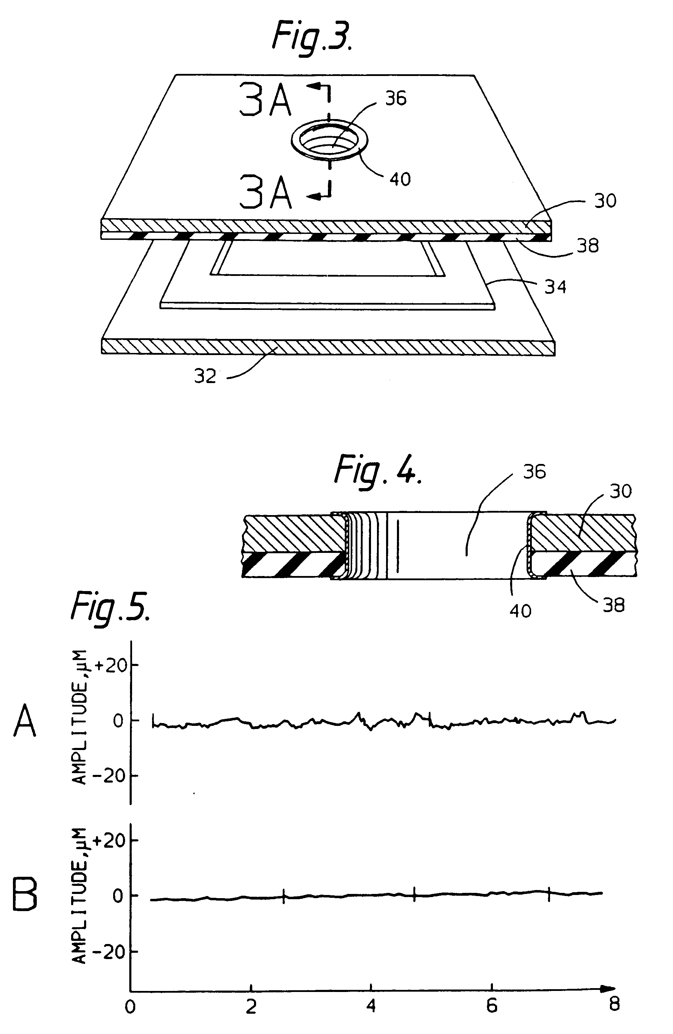

To demonstrate the present invention, a process of glass fibre mat-reinforced reaction injection moulding is used. This is shown in Figure 3 and 3A. First, a mould is constructed using two metal plates 30 and 32 and an apertured shim plate 34. The metal plates, serving as an upper mould member 30 and a lower mould member 32, respectively, have holes in the four corners (not shown) for the purpose of bolting the two plates together. A centre injection port 36 is provided in the top plate 30 to allow the injection of polyurethane resin into the mould cavity formed by the aperture in the shim plate 34. The centre gating method is chosen here for convenience purpose to demonstrate the invention. The method of using side gating has also been tried, and provides equally excellent results in producing smooth panels.

A layer of a flexible sheeting material 38 is placed onto the top plate 30 facing the shim plate 34 with a central hole therein aligned with the centre injection port 36 in the upper metal plate by the use of a flanged metal bushing 40. This is shown enlarged in Figure 3A.

After one or more layers of glass fibre mats are placed inside the aperture of the shim plate 34, the mould is closed with the bolts tightened at the four corners and placed in a press to be heated to 66°C (150°F). After the mould has reached the desired temperature, the press is opened and a polyurethane resin is injected into the hot mould through the centre gate. The polyurethane resin is allowed to cure in the press for one minute and then the mould is opened and the moulded part is removed. The flexible sheeting layer could remain on the mould or could become integrated to the moulded part. The moulded part showed no fibre readout defect. In this laboratory demonstration, the moulding pressure was applied by the tightening of the bolts and the press was used only to heat the mould and not to supply the pressure.

Alternatively, one or more layers of fine and coarse glass veils may be placed on top of the glass fibre mats adjacent to the appearance side of the RIM panel prior to the closing of the moulds. RIM panels having further improved surface smoothness can be obtained by the use of these additional glass fibre veils.

The polyurethane resin used was a two-component system of a diphenylmethane di-isocyanate and a polyether polyol. The isocyanate used was supplied by Dow Chemical Company, U.S.A. as Isonate (R.T.M.) 181 having an equivalent weight of 183.3. The polyol used was supplied by Union Carbide Company, U.S.A. as Niax (R.T.M.) 1134 having an equivalent weight of 1516.2. Also added were a chain extender, i.e., ethylene glycol supplied by Fisher Scientific, U.S.A. as Grade AR, and a catalyst of alkyltin mercaptide commercially available as Formrez (R.T.M.) UL-29 from Witco Company, U.S.A. to improve the processing characteristics of polyurethane resin system used.

A sample formulation of the polyurethane resin system used is shown in Table 1.

**TABLE 1**

| Formulation for the Polyurethane Resin | |
|---|---|
| COMPONENT | WEIGHT PERCENT |
| Isocyanate (diphenylmethane di-isocyanate) | 65.0 |
| Polyol (polyether tetrol) | 25.0 |
| Chain Extender (ethylene glycol) | 10.0 |
| Catalyst (Formrez (R.T.M.) UL-29) | 0.01 |

The flexible sheeting materials used were closed cell foam rubber materials of epichlorohydrin and Neoprene. The physical properties of a sample Neoprene material used are shown in Table 2. It has been found that a thickness of the flexible sheeting material of over 0.254 mm (0.01 inch) is best suited for the process of the present invention.

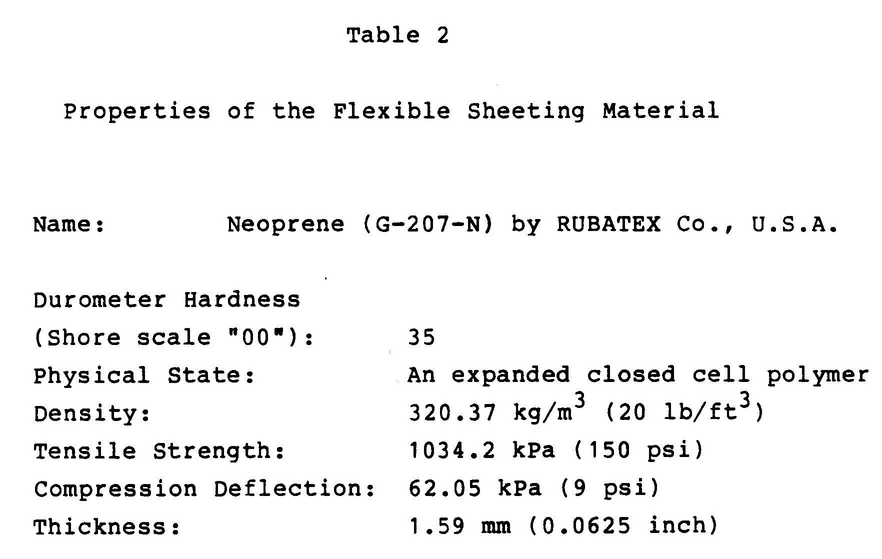

By experimenting with many different types of flexible sheeting materials, it has been discovered that a wide variety of materials may be used in the process of the invention to produce equally satisfactory results. These materials include foam rubber, plastic foams, and felt materials. It has been found that better results were obtained when the durometer readings of the materials were no larger than 60 on ASTM E-2240 Shore "A" scale and the compression deflection in the range of 6.89 to 344.74 kPa (1 to 50 psi) as determined by ASTM D-1056.

Instead of injection moulding of polyurethane material through a centre gate, the process has been demonstrated by a method similar to a hand-lay-up method. A gel coat is first prepared by using the resin formulation shown in Table 1, filled with 30 weight percent of calcium carbonate. A thickness of about 0.5 mm of this gel coat is then applied on the lower plate of the mould which has a smooth surface. This gel coat is allowed to partially cure at 66°C (150°F) for 5 minutes. To simulate a hand-lay-up process, four plies of glass fibre mats are then wetted with liquid resin and hand-laid on top of the gel coat. The upper mould plate with the flexible sheet layer is then placed on the glass fibre mats and pressed by hand to squeeze out the excess resin. The mould assembly is then placed in a press heated to 66°C (150°F) for 5 minutes to achieve the final cure. After curing, a RIM panel with a smooth surface is obtained which showed no fibre readout defect.

It is to be noted that whilst the use of polyurethane resin has been demonstrated in the above embodiments, other polymeric materials have been tried that have worked equally well in the present invention. For instance, other polymeric materials used have been a poly-isocyanurate supplied by Dow Chemical Company, U.S.A. as Spectrim (R.T.M.) MM373, a polycarbonate also supplied by Dow Chemical Co, U.S.A. as Spectrim (R.T.M.) MM310, and a styrene-based interpenetrating network-type polymer supplied by Ashland Company, U.S.A. as Aropol (R.T.M.) 50437. All three materials when used in the present invention have produced plastics panels with smooth appearance surfaces. There is reason to believe that any type of polymeric materials that can be suitably used in a reaction injection moulding type of process can be used successfully in the present invention.

While the present invention has been demonstrated in a preferred embodiment and an alternative embodiment, without and with the use of additional glass veil layers, it is to be appreciated that someone skilled in the art may readily adopt the disclosures of these embodiments to other variations of the disclosed technique utilizing the same principle, without departing from the scope of the claims.

## Claims

1. A method of compression-moulding a glass fibre mat-reinforced plastics panel having at least one appearance surface, using a set of two matched mould members (12,14) of which at least one (14) of said members has an interior mould surface (18) which is the mirror image of the appearance surface of said panel, which method comprises placing at least one glass fibre mat (20) in the mould cavity defined by the interior mould surfaces of said mould members (12,14), clamping the two mould members (12,14) together and applying pressure on said mould members (12,14), introducing a liquid polymeric material into the cavity so as to saturate said mat (20) with said polymeric material, and then curing said saturated mat (20) under heat and pressure transmitted through said mould members (12,14) to produce said panel, characterised in that the method includes placing at least one layer (22) of a flexible sheeting material immediately adjacent to the interior mould surface opposing the mirror image mould surface (18) which produces the appearance surface of said moulded panel, prior to clamping the two mould members (12,14) together and applying pressure on said mould members (12,14).

2. A method of producing a glass fibre mat-reinforced plastics panel according to claim 1, characterised in that, after placing said glass fibre mat (20) in the mould cavity defined by the interior mould surfaces of said mould members (12,14), said two mould members (12,14) are closed together with said one layer of said flexible sheeting material disposed over and adjacent to the interior mould surface opposing said mirror image mould surface (18) producing the appearance surface of said panel; said two mould members (12,14) are then clamped together under a clamping pressure sufficient to prevent any leakage of the liquid polymeric material from the mould cavity; and a sufficient amount of said liquid polymeric material to saturate the mat (20) is injected into said mould cavity through an injection port (36) in said mould.

3. A method of producing a glass fibre mat-reinforced plastic panel according to claim 1 or 2, characterised in that said layer (22) of flexible sheeting material has a thickness of no less than 0.254 mm.

4. A method of producing a glass fibre mat-reinforced plastic panel according to any one of claims 1 to 3, characterised in that said layer (22) of flexible sheeting material has a Shore "A" durometer hardness value of no larger than 60 as determined by ASTM E-2240.

5. A method of producing a glass fibre mat-reinforced plastic panel according to any one of claims 1 to 4, characterised in that the method includes placing at least one layer (16) of a fine texture glass veil between said mat (20) and said mirror image mould surface (18) prior to saturating said mat (20) with said liquid polymeric material.

## Patentansprüche

1. Ein Verfahren der Kompressionsformung einer glasfasermattenverstärkten Kunststofftafel mit zumindest einer Erscheinungsoberfläche, wobei ein Satz von zwei angeglichenen Formgliedern (12, 14) von welchen zumindest eines (14) der Glieder eine innere Formoberfläche (18) hat, welche das Spiegelbild der Erscheinungsoberfläche der Tafel ist, welches Verfahren es umfaßt, daß zumindest eine Glasfasermatte (20) in dem Formhohlraum plaziert wird, der durch die inneren Formoberflächen der Formglieder (12, 14) definiert wird, die zwei Formglieder (12, 14) zusammengeklemmt werden und Druck an die Formglieder (12, 14) angelegt wird, ein flüssiges Polymermaterial in den Hohlraum eingeführt wird, um so die Matte (20) mit dem Polymermaterial zu sättigen und dann die gesättigte Matte (20) unter Wärme und Druck, der durch die Formglieder (12, 14) übertragen wird, ausgehärtet wird, um die Tafel zu erzeugen, dadurch gekennzeichnet, daß das Verfahren einschließt, daß zumindest eine Schicht (22) eines flexiblen Blattmaterials unmittelbar benachbart der inneren Formoberfläche, die der Spiegelbildformoberfläche (18) gegenüberliegt, welche die Erscheinungsoberfläche der geformten Tafel erzeugt, plaziert wird, und zwar bevor die zwei Formglieder (12, 14) zusammengeklammert werden und Druck an die Formglieder (12, 14) angelegt wird.

2. Ein Verfahren zur Erzeugung einer glasfasermattenverstärkten Kunststofftafel nach Anspruch 1, dadurch gekennzeichnet, daß, nachdem die Glasfasermatte (20) in dem Formhohlraum, der durch die inneren Formoberflächen der Formglieder (12, 14) festgelegt wird, plaziert wird, die zwei Formglieder (12, 14) zusammengeschlossen werden, wobei eine Lage des flexiblen Blattmaterials, das über und benachbart der inneren Formoberfläche angeordnet ist, der Spiegelbildformoberfläche (18) gegenüberliegt, was die Erscheinungsoberfläche der Tafel erzeugt; die zwei Formglieder (12, 14) dann unter einem klammerndem Druck zusammengeklammert werden, der hinreichend ist, um jedes Leck des flüssigen Polymermaterials aus dem Formhohlraum zu verhindern; und eine hinreichende Menge des flüssigen Polymermaterials, um die Matte (20) zu sättigen, in den Formhohlraum durch eine Einspritzdurchgangsöffnung (36) in die Form eingespritzt wird.

3. Ein Verfahren zur Erzeugung einer glasfasermattenverstärkten Kunststofftafel nach Anspruch 1 oder 2, dadurch gekennzeichnet, daß die Schicht (22) des flexiblen Blattmaterials eine Dicke von nicht weniger als 0,254 mm besitzt.

4. Ein Verfahren zur Erzeugung einer glasfasermattenverstärkten Kunststofftafel nach einem der Ansprüche 1 bis 3, dadurch gekennzeichnet, daß die Schicht (22) von flexiblem Blattmaterial einen Shore "A" Härteprüfgeräthärtewert von nicht größer als 60 wie bestimmt durch die ASTM E-2240 hat.

5. Ein Verfahren zur Erzeugung einer glasfasermattenverstärkten Kunststofftafel nach einem der Ansprüche 1 bis 4, dadurch gekennzeichnet, daß das Verfahren einschließt, daß zumindest eine Schicht (16) eines feinen Texturglasschleiers zwischen der Hatte (20) und der Spiegelbildformoberfläche (18) plaziert wird, und zwar vor der Sättigung der Hatte (20) mit dem flüssigen Polymermaterial.

## Revendications

1. Procédé de moulage par compression d'un panneau de matière plastique renforcée à l'aide d'un matelas de fibres de verre ayant au moins une surface visible, utilisant un jeu de deux éléments (12,14) formant moule apparié dont au moins un (14) desdits éléments a une surface intérieure de moule (18) qui est l'image miroir de la surface visible dudit panneau, lequel procédé comporte la mise en place d'au moins un matelas (20) de fibres de verre dans la cavité de moule définie par les surfaces intérieures desdits éléments (12,14) de moule, le serrage des deux éléments (12,14) de moule réunis et l'application d'une pression sur lesdits éléments (12,14) de moule, l'introduction d'une matière liquide polymère jusque dans la cavité de manière à saturer ledit matelas (20) à l'aide de ladite matière polymère, et ensuite faire durcir ledit matelas (20) saturé sous la chaleur et la pression transmises à travers lesdits éléments (12,14) de moule pour produire ledit panneau, caractérisé en ce que le procédé comporte la mise en place d'au moins une couche (22) de matière de revêtement souple immédiatement adjacente à la surface intérieure de moule opposée à la surface de moule (18) formant image miroir qui produit la surface visible dudit panneau moulé, avant de serrer les deux éléments (12,14) formant moule ensemble et appliquer une pression sur les dits éléments (12,14) formant moule.

2. Procédé de production d'un panneau de matière plastique renforcée à l'aide d'un matelas de fibres de verre selon la revendication 1, caractérisé en ce qu'après avoir placé ledit matelas (20) de fibres de verre dans la cavité du moule définie par les surfaces intérieures de moule desdits éléments (12,14) formant moule, lesdits deux éléments (12,14) de moule sont fermes ensemble avec une couche de dite matière de revêtement souple disposée sur et adjacente à la surface intérieure de moule située à l'opposé de ladite surface de moule (18) formant image miroir produisant la surface visible dudit panneau, lesdits deux éléments (12,14) de moule sont ensuite réunis par serrage sous une pression de serrage suffisante pour empêcher toute fuite de matière liquide polymère à partir de la cavité du moule ; et une quantité de dite matière liquide polymère suffisante pour saturer le matelas (20) est injectée jusque dans ladite cavité du moule à travers un orifice (36) d'injection situé dans ledit moule.

3. Procédé de production d'un panneau de matière plastique renforcée à l'aide d'un matelas de fibres de verre selon la revendication 1 ou 2, caractérisé en ce que ladite couche (22) de matière de revêtement souple a une épaisseur au moins égale à 0,254 mm.

4. Procédé de production d'un panneau de matière plastique renforcée à l'aide d'un matelas de fibres de verre selon l'une quelconque des revendications 1 à 3, caractérisé en ce que ladite couche (22) de matière de revêtement souple a une valeur de dureté au duromètre Shore "A" qui n'est pas plus grande que 60, telle que déterminée par la norme ASTM E-2240.

5. Procédé de production d'un panneau de matière plastique renforcée par un matelas de fibres de verre selon l'une quelconque des revendications 1 à 4, caractérisé en ce que le procédé comporte la mise en place d'au moins une couche (16) de voile de verre à texture fine entre ledit matelas (20) et ladite surface (18) de moule formant image miroir avant de saturer ledit matelas (20) avec ladite matière liquide polymère.
